# FASCICULE DE BREVET EUROPEEN

(11) **EP 1 556 671 B1**
(45) Date de publication et mention de la délivrance du brevet: **07.03.2007**
(21) Numéro de dépôt: 03767869.5
(22) Date de dépôt: 31.10.2003
(51) Int. Cl.: G01G 13/02, G01G 13/24

(54) **APPAREIL POUR LE DOSAGE DE PRECISION DE POUDRE**
VORRICHTUNG ZUR FEINDOSIERUNG VON PULVER
APPARATUS FOR ACCURATE POWDER METERING

(30) Priorité: 31.10.2002 FR 0213676
(43) Date de publication de la demande: 27.07.2005
(73) Titulaire: Mettler-Toledo Flexilab SAS, 77090 Collegien (FR)
(72) Inventeur: FONTAINE, Ivan-William, F-94130 Nogent-sur-Marne (FR); HERBELIN, Patrick, F-77515 Pommeuse (FR)
(74) Mandataire: Doressamy, Clarisse
(86) Numéro de dépôt international: PCT/FR2003/003253
(87) Numéro de publication internationale: WO 2004/042334

(56) Documents cités:
- EP-A- 0 223 088
- WO-A-02/44669
- DE-A- 19 742 663
- DE-A- 19 809 625
- NL-A- 9 200 532
- US-A- 4 836 417
- US-A- 5 738 153
- US-A- 6 056 027
- US-A1- 2001 027 823
- PANDIT M: "MESSSIGNALVERARBEITUNG UND REGELUNG IN ABFULL- UND ABSACKANLAGEN" , WAGEN UND DOSIEREN, VERLAGSGESELLSCHAFT KEPPLER, MAINZ, DE, VOL. 19, NR. 3, PAGE(S) 92-96 XP000003020 ISSN: 0342-5916 page 92, colonne de gauche, alinéa 1 -page 92, colonne de droite, dernier alinéa; figure 1
- Prospectus : Sartorius Laboratory : "9 modèles avec une précision de lecture de 1 mg et de 10 mg: A vous de choisir" octobre 1986 XP002242609
- PATENT ABSTRACTS OF JAPAN vol. 007, no. 150 (P-207), 30 juin 1983 (1983-06-30) & JP 58 061415 A (NIPPON KOKAN KK), 12 avril 1983 (1983-04-12)

## Description

La présente invention concerne un appareil pour le dosage de précision de poudre ainsi que son procédé de mise en oeuvre et son utilisation.

Dans l'industrie chimique et pharmaceutique, il est régulièrement nécessaire de réaliser des dosages précis de réactifs ou de produits en poudre, en particulier à partir d'une chimiothèque. Lors de la conduite de tests sur un nombre important de produits en poudre, les dosages successifs sont particulièrement fastidieux pour le personnel manipulateur.

Outre le côté répétitif, le personnel manipulateur doit investir un temps considérable et une attention soutenue dans ce type de dosages.

Ces dosages sont d'autant plus fastidieux que les poudres à doser sont en général de natures très différentes et présentent des indices de coulabilité dans une gamme très étendue.

Par ailleurs, la difficulté de dosage est augmentée par le fait que les quantités à doser varient du milligramme à la centaine de grammes, et ce, avec une précision de l'ordre du dixième de milligramme.

Enfin, il est indispensable d'éviter, d'une part, la contamination du personnel manipulateur par les produits dosés, et, d'autre part, la contamination des produits entre eux, problème bien connu de l'homme du métier sous le nom anglais de « cross-pollution », et qui rend les échantillons contaminés inutilisables.

Dans un premier temps, on a cherché à automatiser ces dosages pour les rendre moins fastidieux et plus sûrs, tout en conservant une précision de dosage acceptable.

La demande de brevet FR 2 672 035 illustre ce type de dispositif permettant la distribution de masses définies de poudres. Ce dispositif est constitué d'un récipient à poudre et d'un bouchon doseur comprenant une trémie qui alimente une vis sans fin. Cette vis sans fin assure le transport de la poudre jusqu'à une ouverture de distribution située dans l'axe de rotation de la vis sans fin et sur le côté du bouchon.

Un autre dispositif du même type est décrit dans la demande de brevet FR 2 775 958. Le principe de l'utilisation d'un bouchon muni d'une vis sans fin avec une ouverture de distribution à l'extrémité de la vis sans fin est par ailleurs déjà évoqué dans un document aussi ancien que le brevet US 2,593,803.

Ces dispositifs sont adéquats pour délivrer des masses de poudres à partir de 5 à 8 mg environ, avec une précision de l'ordre de 1 mg.

En revanche, de tels dispositifs ne sont pas appropriés pour des dosages de précision au dixième de milligramme.

En outre, ils ne sont pas adaptés pour des dosages de quantités de l'ordre du gramme puisque la vitesse de dosage est très vite limitée par le système de distribution à vis sans fin. Le temps de dosage devient donc excessivement long.

En ce qui concerne le dosage de grandes quantités de poudre, on peut citer le dispositif décrit dans le modèle d'utilité allemand No. 89 14 389 U au nom de FINK-CHEMIE GmbH. Ce dispositif est équipé d'une entrée alimentant une vis sans fin en poudre. Cette vis sans fin achemine la poudre vers une ouverture de distribution aménagée dans la surface inférieure du dispositif.

Il apparaît toutefois immédiatement que ce type de dispositif n'est pas approprié pour un dosage de précision de grandes quantités et de faibles quantités de poudres de types variés, comme l'exige en particulier une utilisation en chimiothèque. Ce dispositif semble en revanche adapté pour le dosage de grandes masses de certains types de poudres où la précision a une importance moindre. Ce modèle d'utilité ne fait d'ailleurs aucunement mention de quelconques exigences de précision de dosage.

Un autre dispositif pour le dosage de précision de poudre, développé par la Demanderesse, a été décrit dans les demandes de brevet FR 01 06090 et PCT/FR02/01484 non encore publiées.

Ces demandes de brevet décrivent un bouchon doseur amélioré, à fixer sur un récipient à poudre. Ce bouchon doseur comprend une trémie qui alimente une vis sans fin. Cette vis sans fin transporte latéralement la poudre jusqu'à une ouverture située sur la face inférieure du bouchon.

L'amélioration consistant à placer l'ouverture sur la face inférieure du bouchon a permis d'atteindre des précisions moyennes de dosage de l'ordre de 0,1 mg, c'est-à-dire extrêmement satisfaisantes pour une utilisation en chimiothèque.

Toutefois, des inconvénients découlent de l'utilisation d'un mécanisme à vis sans fin dans ces dispositifs de dosage.

Outre le problème de la lenteur du dosage évoqué ci-dessus, ce type de mécanisme limite considérablement la miniaturisation des appareils doseurs. En effet, la vis sans fin ne peut être miniaturisée que jusqu'à une taille limite en-dessous de laquelle elle ne peut plus remplir sa fonction de transport de la poudre avec certaines poudres. En conséquence de quoi, les bouchons doseurs utilisant une vis sans fin peuvent difficilement être miniaturisés en-dessous de 2 cm pour doser certaines poudres.

Or la plupart des piluliers utilisés en chimiothèque et sur lesquels les bouchons doseurs sont fixés, font environ 1,5 cm de diamètre ou moins.

Par ailleurs, le mécanisme à vis sans fin n'est plus aussi efficace lorsqu'il s'agit de distribuer des poudres à indice de coulabilité soit très faible, c'est-à-dire inférieur à 2, soit très élevé, c'est-à-dire supérieur à 8. En effet, lorsque l'indice de coulabilité est très faible, la vis sans fin achemine difficilement la poudre jusqu'à l'ouverture de distribution et, au contraire, lorsque la poudre a un indice de coulabilité très élevé, elle glisse d'elle même le long du pas de vis sans que la vis sans fin soit actionnée et puisse jouer son rôle dans le contrôle de la distribution.

Un autre inconvénient est que, dans le cas de poudres à granulométrie élevée, le pas de vis de la vis sans fin a tendance à broyer les grains. Or dans certaines applications, cette tendance est absolument indésirable puisqu'elle dégrade la poudre dosée.

Enfin, les méthodes d'analyses en chimie étant réalisées sur des quantités de poudres toujours plus petites, les exigences de précisions sont en conséquence toujours plus importantes.

Considérant qu'il existe un besoin en un appareil de dosage répondant à ces difficultés techniques, la Demanderesse a mis au point l'appareil pour le dosage de précision de poudre objet de la présente invention.

L'invention vise également un procédé pour le dosage de précision de poudre mettant en oeuvre le dispositif de l'invention ainsi que l'utilisation de ce dispositif pour le dosage de précision de poudre.

Le dispositif doseur de l'invention est particulièrement adapté pour l'aliquotage à partir d'une chimiothèque ou pour le fractionnement à partir de flacons de réserve. Il pourra être utilisé avec des poudres ou petits solides de granulométries et apparences très différentes, par exemple du talc, du lactose, de l'amidon de maïs ou du sable. Dans cette demande de brevet, et conformément à la définition donnée dans le Dictionnaire de la Chimie 3^{éme} édition, DUVAL, le terme « poudre » désigne un solide finement divisé.

Les figures qui sont présentés ci-dessous illustrent des modes de réalisation particuliers de l'invention. Ils ont pour but principal de faciliter la compréhension de l'invention et non de la limiter aux seuls modes de réalisation illustrés.
La figure 1 est une représentation schématique d'un appareil pour le dosage selon l'invention.
La figure 2 est une vue éclatée de côté d'un conteneur selon l'invention.
La figure 3 est une vue en coupe d'un conteneur selon l'invention.
La figure 4 est une vue de la face inférieure d'un conteneur selon l'invention dont on a démonté l'ouverture réglable.
La figure 5 est une vue de la face inférieure d'un conteneur selon l'invention.
La figure 6 est une autre vue en coupe d'un conteneur selon l'invention en position de dosage.
Les figures 7A, 8A, 9A et 10A sont des vues en coupe d'un conteneur selon l'invention en cours de fonctionnement.
Les figures 7B, 8B, 9B et 10B sont des vues de la face inférieure d'un conteneur selon l'invention en cours de fonctionnement.
La figure 11 est une vue en coupe d'un mode de réalisation particulier du conteneur selon l'invention, comprenant un brasseur.
La figure 12 est une vue en perspective du brasseur représenté sur la figure 11.
La figure 13 est une vue en perspective et en coupe d'un mode de réalisation particulier de l'ouverture de distribution du conteneur selon l'invention.

L'appareil (1) pour le dosage de précision de poudre objet de l'invention comprend :
- un conteneur (2) de poudre (3), comprenant une ouverture réglable (4A, 4B) par laquelle la poudre (3) est distribuée, ladite ouverture (4A, 4B) étant en communication directe avec le conteneur (2) ;
- des moyens de réglage (5) de ladite ouverture (4A, 4B) ;
- un moyen de contrôle (6) de la poudre (3) distribuée, en relation avec lesdits moyens de réglage (5) ; et
- un moyen de vibration (27) et/ou de tapotage (28) du conteneur (2).

La Demanderesse a découvert, que de façon surprenante, les moyens de vibration et/ou de tapotage sont à part entière des moyens d'améliorer substantiellement la précision du dosage des poudres.

En effet, la vibration et/ou le tapotage du conteneur (2) permet un dosage très fin des poudres, plus fin que ne le permet la seule variation de l'ouverture (4A, 4B).

De ce fait, l'appareil (1) permet de distribuer des poudres avec une précision supérieure ou égale à 100 µg, de préférence avec une précision supérieure ou égale à 50 µg, et plus préférentiellement avec une précision supérieure ou égale à 10 µg. Cela signifie qu'avec certaines poudres, l'appareil (1) est capable de doser avec une précision supérieure ou égale à 2 µg, et même avec une précision allant jusqu'à 1 µg. Avec certaines poudres, l'appareil (1) peut donc doser au grain de poudre près.

En termes de précision moyenne, l'appareil (1) est apte à distribuer des poudres avec une précision moyenne supérieure ou égale à 0,5 mg, de préférence avec une précision moyenne supérieure ou égale à 0,2 mg, et plus préférentiellement encore avec une précision moyenne supérieure ou égale à 0,1 mg. La précision moyenne est la précision obtenue pour la majeure partie des pesées, c'est-à-dire pour au moins 50% des pesées effectuées, de préférence au moins 75%, et plus préférentiellement encore au moins 85% des pesées. Le chiffre maximum de 100% des pesées pourra même être atteint dans certains cas.

On entend par une précision supérieure, une précision plus fine ou meilleure, de sorte à doser de manière plus précise.

Par ailleurs, l'appareil (1) selon l'invention permet de doser des poudres ayant un indice de coulabilité compris dans une gamme très large. Des poudres ayant un indice de coulabilité inférieur ou égal à 2 ou supérieur ou égal à 8, de préférence des poudres ayant un indice de coulabilité inférieur à 1 ou supérieur à 9, voire supérieur ou égal à 10, peuvent être dosées avec les précisions mentionnées ci-dessus.

L'indice de coulabilité est défini par une aptitude plus ou moins grande que possède la poudre à être dosée. Cette aptitude est influencée par différents facteurs tels que : la viscosité, les charges électrostatiques portées ou encore la granulométrie ou l'humidité et les forces capillaires. Cet indice de coulabilité est généralement défini sur une échelle de 0 à plus de 10. Les poudres ayant un indice de 0 à 2 sont dites très cohésives, celles de 2 à 4 sont dites cohésives, celles de 4 à 10 sont dites moyennes et celles à indice supérieur à 10 sont dites libres. La coulabilité peut par exemple être déterminée par le test de JENIKE, test bien connu de l'homme du métier.

Le document intitulé « MESSSIGNALVERARBEITUNG UND REGELUNG IN ABFULL- UND ABSACKANLAGEN », WAGEN UND DOSIEREN, VERLAGSGESELLSCHAFT KEPPLER, MAINZ, DE, VOL. 19, NR. 3, Pages 92-96 XP000003020 de PANDIT, concerne le traitement du signal de mesure et les réglages pour des dispositifs de remplissage et de mise en sacs. Ce document décrit incidemment un appareil constitué d'un conteneur doté d'une ouverture variable contenant de la poudre à distribuer, de moyens de réglage de l'ouverture et d'une balance pour la pesée de la poudre. Ce document ne semble en revanche pas concerner le dosage de précision. Il convient d'ailleurs de souligner que le document ne donne aucune précision de dosage.

En outre, à la différence de l'invention, ce document ne décrit pas un moyen de vibration et/ou de tapotage du conteneur.

Le brevet US 5 738 153 décrit également un dispositif pour le dosage de poudre comprenant une ouverture variable à valve. En revanche, ce document ne décrit pas non plus un moyen de vibration et/ou de tapotage du conteneur.

En conséquence de quoi, aucun des dispositifs de dosage décrits dans l'art antérieur ne permet d'atteindre les précisions de dosage atteintes par le dispositif selon l'invention.

En outre, du fait que l'appareil (1) selon l'invention ne comprend pas de vis sans fin, il peut être miniaturisé jusqu'à des dimensions inférieures à 2 cm, voire même égales ou inférieures à 1 cm.

De plus, l'absence de vis sans fin permet une distribution plus rapide, sans broyer les grains de poudre à doser. A titre d'exemple, un dosage de 2 g de poudre, par exemple d'amidon de maïs, a pu être réalisé en moins de 20 secondes, et ce, avec les précisions mentionnées ci-dessus.

La description détaillée qui suit, décrivant l'appareil (1), les moyens qu'il comprend et leur coopération permettront de mieux comprendre l'invention.

L'appareil (1) selon l'invention comprend un conteneur (2) de poudre (3).

Ce conteneur peut être en une ou plusieurs parties.

Dans un mode de réalisation particulier, le conteneur (2) est en deux parties, une partie récipient (8) et une partie bouchon (9). Dans ce cas, les parties récipient (8) et bouchon (9) peuvent être fixées l'une à l'autre par n'importe quel moyen connu de l'homme du métier, par exemple par vissage ou clipsage. Pour assurer l'étanchéité de la fixation du récipient (8) avec le bouchon (9), on peut prévoir un joint (10).

Une trémie (14) peut en outre être agencée dans le conteneur (2) pour guider la poudre (3) jusqu'à l'ouverture réglable (4A, 4B) et ainsi aider à l'alimentation de ladite ouverture.

Le conteneur (2) peut avoir n'importe quelle taille ou forme, notamment la forme d'un cône, de section circulaire ou non, délimité par une paroi, une première et une seconde face d'extrémité. Ces faces d'extrémité peuvent être perpendiculaires à l'axe du cône ou non. Le conteneur (2) peut être en n'importe quel matériau thermiquement stable dans les conditions d'utilisation et de stockage et chimiquement inerte vis à vis des poudres à doser. Il pourra s'agir en particulier d'un matériau polymère tel que le polyéthylène, le polypropylène, les polymères fluorés, par exemple le polytétrafluoréthylène (teflon(TM). Dans le cas d'un conteneur (2) en deux parties, chacun du récipient (8) et bouchon (9) pourra être moulé.

Le conteneur (2) peut également être recouvert d'une cape (7) lorsqu'il n'est pas en mode de fonctionnement, notamment pour le stockage. Cette cape (7) garantit la conservation de la poudre (3) vis-à-vis de l'air.

Le conteneur (2) est en communication ou relation directe avec l'ouverture réglable (4A, 4B), c'est-à-dire de façon à ce que la poudre (3) puisse être acheminée du conteneur (2) vers l'ouverture réglable (4A, 4B) par le simple effet de la gravité, notamment sans être transportée par un élément mécanique, par exemple une vis sans fin.

On peut également envisager différents types d'ouvertures réglables, notamment à boisseau (4A, 4B) ou à tiroir (4A, 4C). Cette ouverture réglable (4A, 4B) ou (4A, 4C) sera de préférence réglable jusqu'à obturation totale.

Le boisseau (4B) peut être du type valve cylindrique, de préférence du type valve cylindrique conique pour des raisons d'étanchéité.

L'ouverture réglable (4A, 4B) est réglée par des moyens de réglage (5) qui sont en relation avec un moyen de contrôle (6) de la distribution.

Les moyens de réglage (5) sont capables de régler la taille de l'ouverture pour permettre un dosage plus ou moins rapide et plus ou moins précis de la poudre (3). En effet, plus l'ouverture réglable (4A, 4B) sera petite, plus le débit de poudre (3) distribuée sera faible et plus la précision sera fine. A l'inverse, plus l'ouverture réglable (4A, 4B) sera grande, plus le débit de poudre (3) distribuée sera important et moins la précision sera fine.

Des moyens de réglage (5) appropriés sont par exemple un moteur en relation avec un élément de transmission (11) actionnant la fermeture ou l'ouverture de l'ouverture réglable (4A, 4B). Cette ouverture réglable (4A, 4B) comprend en général deux parties : une ouverture (4A) proprement dite et un mécanisme d'ouverture et de fermeture (4B) de l'ouverture. On peut envisager un grand nombre de formes pour l'ouverture (4A), par exemple circulaire, carrée, en losange ou encore en triangle. La forme préférée de l'ouverture réglable (4A, 4B) est toutefois le triangle.

Dans le cas d'une ouverture à boisseau (4A, 4B), l'élément de transmission (11) peut être une tige, reliée à un moteur, dont l'extrémité cruciforme mâle vient collaborer avec une encoche cruciforme femelle à l'extrémité, dans l'axe du boisseau (4B).

Le dosage est contrôlé par un moyen de contrôle (6). Ce moyen de contrôle peut comprendre tout moyen approprié pour déterminer la quantité de poudre (3) distribuée. Ce moyen de contrôle (6) peut être par exemple un moyen optique, comme le laser, ou un dispositif mesurant le volume de la poudre. Le moyen de contrôle (6) est de préférence un moyen de pesage qui permet de peser la quantité de poudre déjà distribuée par l'ouverture réglable (4A, 4B). Dans la suite de la présente demande, on parlera principalement de moyen de pesage sans exclure aucun autre moyen de contrôle.

Un moyen de pesage (6) approprié est par exemple une balance ayant une précision de pesée supérieure ou égale à 0,1 mg.

Le moyen de contrôle (6) est en relation avec les moyens de réglage (5). Cette relation est de préférence une relation électronique.

Le moyen de contrôle (6) mesure la quantité de poudre (3) déjà distribuée par l'ouverture réglable (4A, 4B) et retourne la valeur de mesure aux moyens de réglage (5) qui, en fonction de la valeur de pesée retournée, vont régler le dosage en ouvrant davantage ou en fermant l'ouverture réglable (4A, 4B).

Les moyens de réglage (5) peuvent comprendre un ordinateur équipé d'un logiciel. Le logiciel peut être capable de traiter les valeurs des mesures retournées par le moyen de contrôle (6). Ce logiciel peut également piloter les moyens de réglage (5) en fonction des mesures de contrôle fournies par le moyen de contrôle (6). Les moyens de réglage (5) peuvent également comprendre un moteur en relation avec un élément de transmission (11) actionnant l'ouverture ou la fermeture de l'ouverture réglable (4A, 4B).

Les moyens de réglage (5) peuvent en outre être paramétrés en fonction de la nature de la poudre à distribuer. En effet, si la poudre a un haut indice de coulabilité, elle aura tendance à couler très rapidement à travers l'ouverture réglable (4A, 4B). Le logiciel peut donc être paramétré pour que l'ouverture réglable (4A, 4B) soit très faiblement ouverte lors des dosages avec de telles poudres.

Lors du dosage, on tapote ou/et on fait vibrer le conteneur (2).

Le tapotage et/ou la vibration ont deux principaux effets.

Le premier effet est de faciliter la distribution de la poudre en décolmatant la poudre ou en éliminant les effets de voûte ou de cheminée se formant dans le conteneur (2). Ceci permet de faciliter l'alimentation de l'ouverture réglable (4A, 4B).

Le second effet est d'améliorer substantiellement la précision du dosage des poudres. En effet, la vibration et/ou le tapotage mettent la poudre en mouvement dans le conteneur (2) et acheminent progressivement celle-ci jusqu'à l'ouverture de distribution (4A, 4B). La vibration et/ou le tapotage représentent donc un moyen très fin d'alimenter l'ouverture (4A, 4B) et donc de doser.

Dans ces cas, le dispositif selon l'invention comprendra avantageusement un dispositif favorisant la distribution de la poudre, notamment par tapotage grâce par exemple à un doigt mobile et escamotable qui peut venir frapper le conteneur (2), par exemple 4 fois par seconde, ou/et par vibration grâce en particulier à une fourchette de maintien du dispositif.

L'homme du métier reconnaîtra que de nombreux types de dispositifs sont adaptés comme moyens de vibration et/ou de tapotage du conteneur (2).

Des moyens optionnels, favorisant la distribution, peuvent en outre équiper l'appareil (1) selon l'invention.

Dans le cas de poudres très peu coulantes ou générant des effets de voûte et afin de faciliter la chute de la poudre vers l'ouverture, on peut équiper l'intérieur du conteneur (2) de brasseurs (12) aidant à alimenter l'ouverture réglable (4A, 4B). La fonction de ces brasseurs est de casser les effets de voûte en brassant la poudre ou encore de gaver l'ouverture réglable (4A, 4B). De tels brasseurs (12) peuvent par exemple être un foret rotatif équipé de pales.

Dans un mode de réalisation particulier de l'appareil
(1) selon l'invention ledit brasseur (12) comprend un foret rotatif disposé selon un axe passant par l'ouverture (4A, 4C) et sensiblement normal à celle-ci, ledit foret comprenant :
   - une première extrémité située à proximité de l'ouverture (4A, 4C), ladite première extrémité présentant un pas de vis apte à acheminer la poudre vers l'ouverture (4A, 4B),
   - une seconde extrémité opposée à la première extrémité, ladite seconde extrémité étant fixée à un rotor,
   - des pales fixées sur le foret et qui saillent radialement de l'axe de rotation.

Selon un autre mode de réalisation de l'appareil selon l'invention, le brasseur (12) peut être disposé selon un axe passant par l'ouverture (4A, 4B), ledit brasseur (12) comprenant :
- une première extrémité (12A) agencée à proximité du plan moyen de l'ouverture (4A, 4B), et
- une seconde extrémité (12B) opposée à la première extrémité (12A) et qui est reliée à un dispositif transmettant au brasseur (12) un mouvement de va-et-vient selon ledit axe passant par l'ouverture (4A, 4B), et éventuellement un mouvement rotatif autour dudit axe passant par l'ouverture (4A, 4B).

Le brasseur (12) peut être relié de façon réversible au dispositif lui transmettant un mouvement de va-et-vient et de rotation. Le brasseur (12) peut par exemple y être relié par vissage, clipsage ou tout autre moyen adapté connu de l'homme du métier.

Selon un mode préféré de réalisation de l'appareil (1) selon l'invention, le brasseur (12) est une tige (16).

Selon un autre mode de réalisation préféré de l'appareil (1) selon l'invention, la première extrémité (12A) dudit brasseur (12) comprend une tige (16) et la deuxième extrémité (12B) dudit brasseur (12) comprend une lamelle (15) recourbée sur elle-même pour former une boucle allongée selon ledit axe passant par l'ouverture (4A, 4B), ladite lamelle (15) comportant des ailettes (15A) qui saillent de la surface intérieure de la lamelle (15) recourbée en direction dudit axe.

Selon un mode de réalisation de l'appareil (1) selon l'invention, le dispositif transmettant au brasseur un mouvement de va-et-vient comprend :
- un moyen de transmission (17) reliée à la deuxième extrémité (12B) du brasseur (12),
- un moyen de poussage (21),
- un moyen de tirage (18),
ledit moyen de poussage (21) transmettant un mouvement de translation audit moyen de transmission (17) dans un premier sens selon l'axe dudit moyen de transmission (17) et ledit moyen de tirage (18) transmettant un mouvement de translation audit moyen de transmission (17) selon un sens opposé au premier sens.

Le dispositif transmettant au brasseur un mouvement rotatif peut comprendre un moyen de transmission (17) relié à la deuxième extrémité (12B) du brasseur (12), ledit moyen de transmission (17) comportant un engrenage d'entraînement (22) qui est entraîné par un engrenage moteur (23) fixé à un moteur (24).

Par ailleurs, dans un mode de réalisation particulièrement préféré de l'appareil selon l'invention, dans le brasseur (12) :
- la première extrémité (12A) dudit brasseur (12) comprend une tige (16) et la deuxième extrémité (12B) dudit brasseur (12) comprend une lamelle (15) recourbée sur elle-même pour former une boucle allongée selon ledit axe passant par l'ouverture (4A, 4B), ladite lamelle (15) comportant des ailettes (15A) qui saillent de la surface intérieure de la lamelle (15) recourbée en direction dudit axe,
- le dispositif transmettant au brasseur (12) un mouvement de va-et-vient comprend un moyen de transmission (17) reliée à la deuxième extrémité (12B) du brasseur (12), un moyen de poussage (21), un moyen de tirage (18), ledit moyen de poussage (21) transmettant un mouvement de translation audit moyen de transmission (17) dans un premier sens selon l'axe dudit moyen de transmission (17) et ledit moyen de tirage (18) transmettant un mouvement de translation audit moyen de transmission (17) selon un sens opposé au premier sens,
- le dispositif transmettant au brasseur (12) un mouvement rotatif comprend un moyen de transmission (17) relié à la deuxième extrémité (12B) du brasseur (12), ledit moyen de transmission (17) comportant un engrenage d'entraînement (22) qui est entraîné par un engrenage moteur (23) fixé à un moteur (24).

Le moyen de transmission peut par exemple être une barre, arbre ou un rotor.

Le moyen de poussage peut par exemple être un vérin pneumatique ou hydraulique.

Le moyen de tirage peut notamment être un ressort ou un second vérin pneumatique ou hydraulique.

L'homme du métier reconnaîtra que de nombreux types de matériaux peuvent être utilisés pour le brasseur (12). Toutefois, le brasseur (12) sera de préférence réalisé en clinquant.

En outre, dans l'appareil (1) selon l'invention, le moyen de tapotage et/ou le brasseur (12) peuvent être pilotés par un logiciel en fonction de mesures de contrôle fournies par le moyen de contrôle (6) et éventuellement en fonction de caractéristiques de la poudre (3).

On peut aussi envisager d'équiper le conteneur (2) d'un racleur (13) permettant de racler la poudre (3) se trouvant au fond du conteneur (2) pour en faciliter la distribution lorsque le conteneur (2) est en mode de fonctionnement. Ce racleur (13) peut par exemple être une lame incurvée, de préférence montée pivotante sur un axe vertical du conteneur (2). Ce racleur (13) peut aussi être une brosse rotative. Cette brosse rotative peut être notamment positionnée et être mise en rotation sur un axe parallèle au plan défini par l'ouverture réglable (4A, 4B).

Le dispositif selon l'invention peut aussi être couplé à un ou plusieurs dispositifs anti-électrostatiques, générant un champ électrique favorisant la distribution de la poudre. Sans pour autant être lié par une quelconque théorie, la Demanderesse pense que les poudres à doser sont naturellement chargées ou que la friction des grains du produit à doser sur les éléments du dispositif génère des espèces chargées. Les charges induisent des forces conduisant notamment à l'agglomération des grains entre eux ou à une aimantation des grains au contact des éléments de l'appareil (1). De préférence, l'appareil (1) selon l'invention est ainsi équipé d'au moins un dispositif anti-électrostatique placé sur le conteneur (2) à la sortie de l'ouverture réglable (4A, 4B) et générant un champ électrique qui permet de canaliser le mouvement des particules. Afin de couvrir toute l'ouverture de distribution, on utilisera de préférence deux dispositifs anti-électrostatiques. Un dispositif anti-électrostatique peut être une sonde ionisante en pointe, générant un champ électrique de 4 kV par exemple.

Un procédé pour le dosage de la poudre mettant en oeuvre l'appareil (1) selon l'invention, peut comprendre l'une ou plusieurs des étapes suivantes :
- mise en place du conteneur (2) en position de dosage,
- ouverture de l'ouverture réglable (4A, 4B) par les moyens de réglage (5),
- vibration et/ou tapotage du conteneur (2),
- mesure de la quantité de poudre (3) distribuée par le moyen de contrôle (6),
- ouverture ou fermeture de l'ouverture réglable (4A, 4B) par les moyens de réglage (5) en fonction de la mesure retournée par le moyen de contrôle (6),
- réglage des moyens de vibration et/ou de tapotage du conteneur (2) en fonction de la mesure retournée par le moyen de contrôle (6).

Lorsque qu'un dosage est terminé, le conteneur (2) est éventuellement encapuchonné à l'aide d'une cape (7) prévue à cet effet.

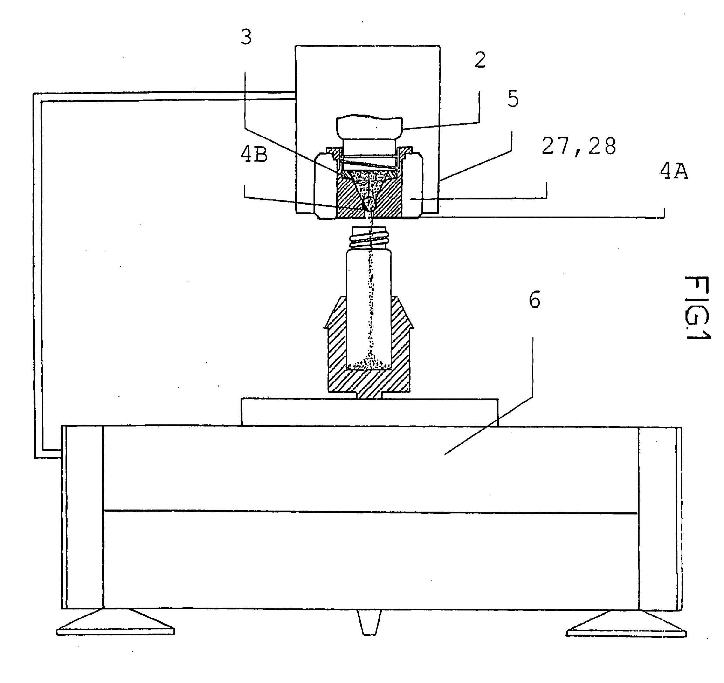

La figure 1, est une vue d'ensemble d'un mode de réalisation de l'appareil (1) en mode de fonctionnement. Le conteneur (2), qui contient la poudre (3) est en position de dosage et est représenté en coupe. Ce conteneur (2) est relié à des moyens de réglage (5) de l'ouverture réglable (4A, 4B). La poudre est dosée à travers cette ouverture réglable (4A, 4B) dans un pilulier disposé sous le conteneur (2). Ce pilulier est placé sur le moyen de contrôle (6) qui est ici représenté par une balance de précision. Le moyen de contrôle (6) est en relation avec les moyens de réglage (5). Sur cette figure, le conteneur (2) est maintenu par un moyen de vibration (27) du conteneur (2). Ce moyen de vibration et/ou de tapotage est une fourchette de maintien (27, 28) sur cette figure. Le moyen de vibration et/ou de tapotage est ici combiné, c'est-à-dire un seul et même élément.

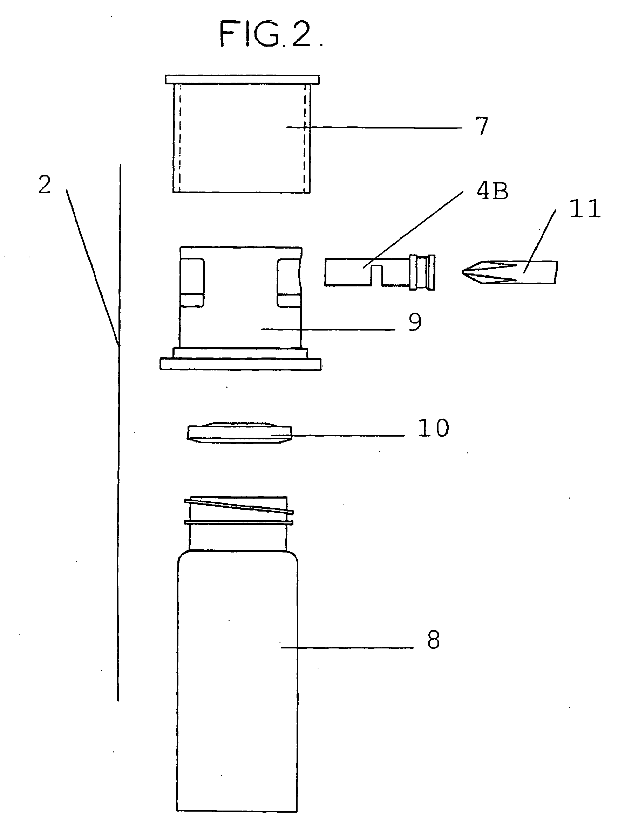

La figure 2 est une vue éclatée d'un mode de réalisation d'un conteneur (2) en deux parties et à ouverture à boisseau (4A, 4B). La cape (7) a été retirée du bouchon (9). Le boisseau (4B) va se placer dans le logement du bouchon (9) et coopère avec l'élément de transmission (11). Le bouchon (9) a été dévissé du récipient (8).

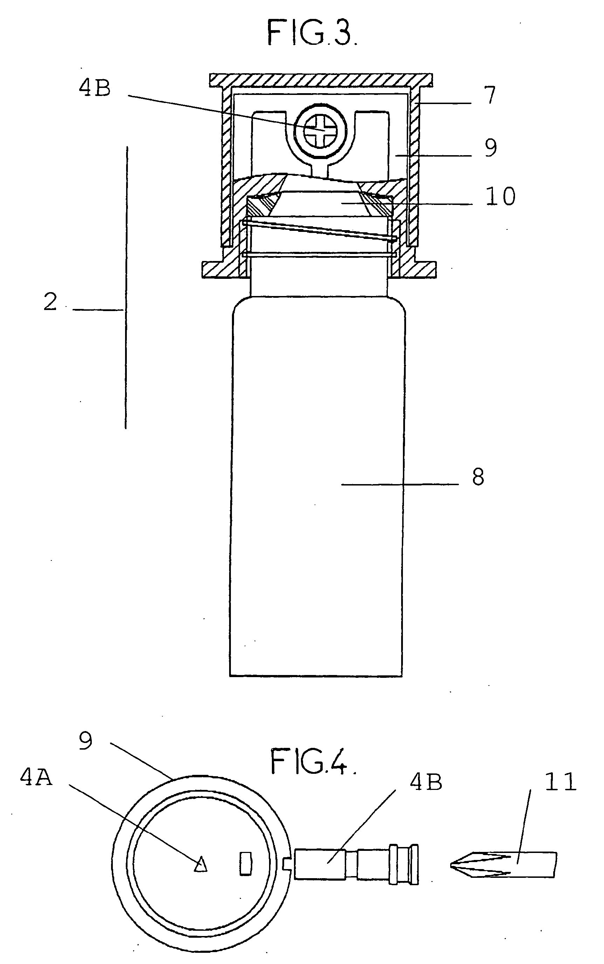

La figure 3 est une vue en coupe d'un conteneur (2) en deux parties. Sur cette figure, le conteneur (2) est représenté avec son ouverture réglable (4A, 4B) vers le haut, c'est à dire lorsqu'il ne fonctionne pas. Par ailleurs la cape (7) couvre le bouchon (9). Le boisseau (4B) est représenté selon un axe fuyant et perpendiculaire à la feuille. On peut distinguer l'encoche femelle cruciforme qui coopère avec l'extrémité cruciforme mâle de l'élément de transmission (11).

La figure 4 est une vue éclatée de la face de distribution du bouchon (9) représenté sur la figure 2. L'ouverture à boisseau (4A, 4B) comprend une ouverture (4A) en triangle et un boisseau (4B) hors de son logement du bouchon (9). L'élément de transmission (11) a été retiré du boisseau (4B). La figure 13 est une autre vue en perspective et en coupe de l'ouverture en triangle (4A).

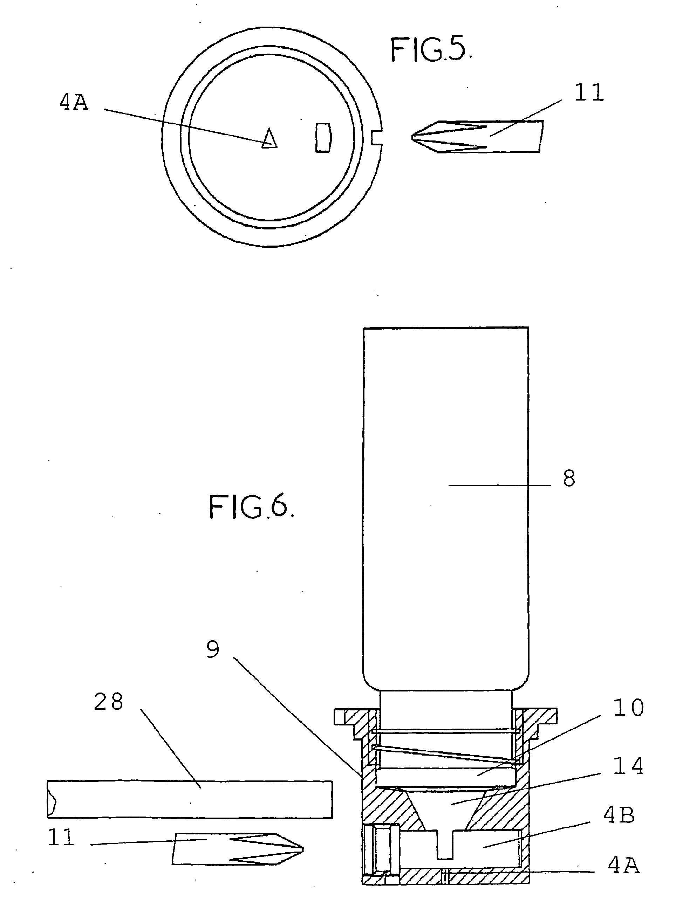

La figure 5 est une vue de la face de distribution du bouchon (9) une fois monté. Sur cette vue, le boisseau (4B), que l'on ne voit pas, est placé dans le bouchon (9) et coopère avec l'ouverture (4A). L'élément de transmission (11) est représenté retiré de l'encoche cruciforme du boisseau (4B).

La figure 6 est une vue en coupe du conteneur (2) prêt à fonctionner. Le bouchon (9) est vissé au récipient (8) autour du joint (10). La trémie (14) alimente l'ouverture réglable (4A, 4B). Un moyen de tapotage (28) représenté par un doigt escamotable (28) est agencée sur le côté du conteneur (2) afin de permettre un tapotage du conteneur (2).

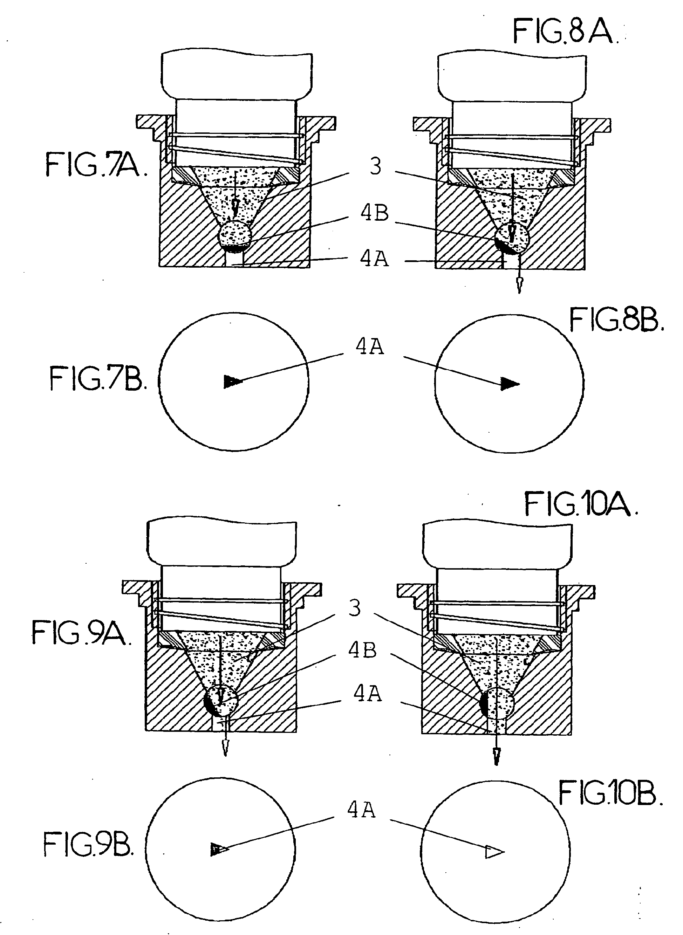

Les figures 7A, 8A, 9A et 10A et 7B, 8B, 9B et 10B illustrent le fonctionnement d'un conteneur (2) pendant l'opération de dosage.

Les figures 7A, 8A, 9A et 10A sont des vues en coupe d'un conteneur (2) et sont à mettre en parallèle avec les figures 7B, 8B, 9B et 10B qui sont des vues de la surface inférieure du même conteneur (2).

Avant le début du dosage, l'ouverture réglable (4A) est complètement obturée sur les figures 7A et 7B.

Au début du dosage (figures 8A et 8B), le boisseau (4B) est pivoté sur son axe et ouvre légèrement l'ouverture réglable (4A) qui distribue la poudre (3) à un très faible débit.

Dans les figures 9A et 9B, le boisseau (4B) continue de pivoter et ouvre d'avantage l'accès à l'ouverture réglable (4A). Le débit de poudre (3) est donc plus important.

Enfin, les figures 10A et 10B, le boisseau (4B) ouvre complètement l'accès à l'ouverture réglable (4A), le débit de poudre (3) distribuée est alors maximal.

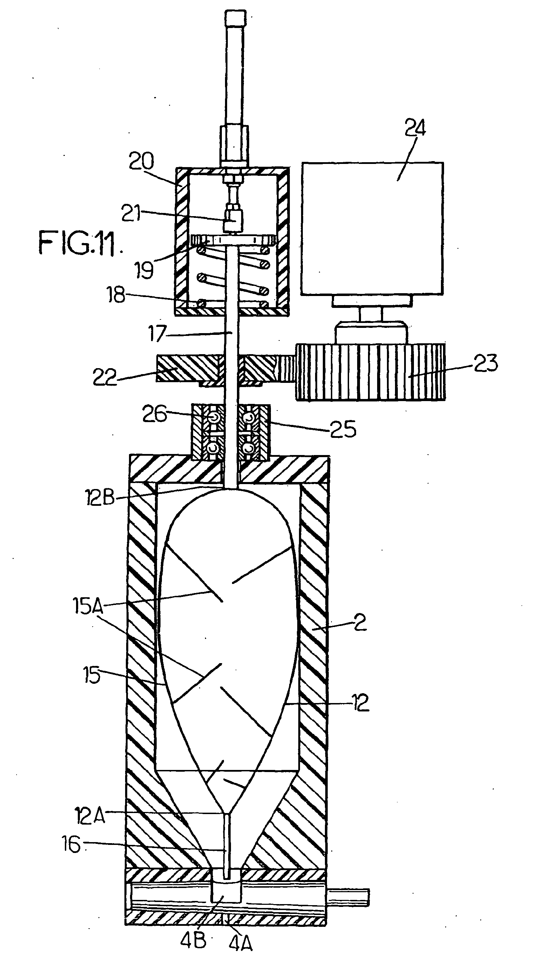

La figure 11 est une vue en coupe d'un mode de réalisation d'un conteneur (2) comprenant une ouverture à boisseau cylindrique conique (4A, 4B) et un brasseur (12).

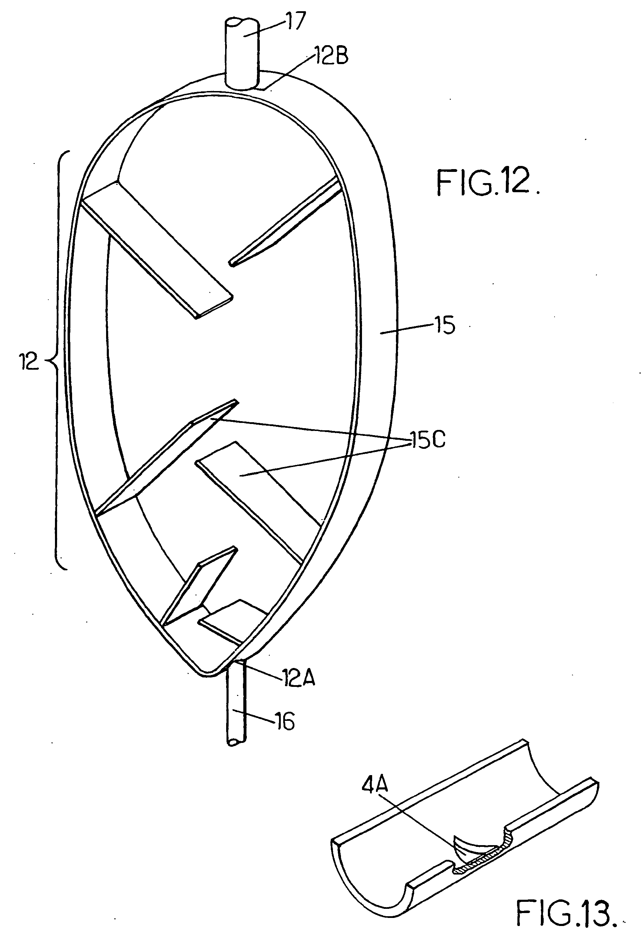

La figure 12 est une vue en perspective du brasseur (12) représenté sur la figure 11.

Sur ces figures, le brasseur (12) est disposé selon un axe passant par l'ouverture (4A, 4B). Le brasseur comprend une première extrémité (12A) qui est agencée à proximité du plan moyen de l'ouverture (4A, 4B), et une seconde extrémité (12B) opposée à la première extrémité (12A). La première extrémité (12A) dudit brasseur (12) est une tige (16) et la deuxième extrémité (12B) dudit brasseur (12) est une lamelle (15) recourbée sur elle-même pour former une boucle allongée selon ledit axe passant par l'ouverture (4A, 4B). Ladite lamelle (15) comporte des ailettes (15A) qui saillent de la surface intérieure de la lamelle (15) recourbée en direction dudit axe.

Cette deuxième extrémité est reliée à un dispositif transmettant au brasseur (12) un mouvement de va-et-vient selon ledit axe passant par l'ouverture (4A, 4B), et un mouvement rotatif autour dudit axe passant par l'ouverture (4A, 4B). Le dispositif transmettant au brasseur un mouvement de va-et-vient comprend un moyen de transmission (17) qui est relié à la deuxième extrémité (12B) du brasseur (12), un moyen de poussage (21) et un moyen de tirage (18).

Le moyen de poussage (21) est ici un vérin et ledit élément de tirage est un ressort (18), disposé dans une cage de ressort (20).

Le vérin (21) transmet un mouvement de translation audit moyen de transmission (17) par l'intermédiaire du plateau (19) dans un premier sens selon l'axe dudit moyen de transmission (17). Le moyen de transmission (17) transmet donc un mouvement de translation dans un premier sens au brasseur (12). Dans son mouvement de translation, le moyen de transmission (17) (ici une barre) entraîne l'engrenage (22) fixé sur celui-ci. L'engrenage (22) se déplace donc par rapport à l'engrenage (23).

Par son mouvement de translation, le vérin (21) comprime le ressort (18) de sa position de repos à une position comprimée. Lorsque l'action du vérin (21) est stoppée et que le vérin n'applique plus de force sur le ressort (18), le ressort (18) retourne à sa position de repos en transmettant un mouvement de translation audit moyen de transmission (17) selon un sens opposé au sens de déplacement transmis par le vérin (21). En répétant l'action du vérin (21) et du ressort (18) on crée un mouvement de va et vient du brasseur (12) et de la tige (16).

La tige (16) va de ce fait se déplacer en translation selon l'axe du brasseur (12) dans l'ouverture (4A, 4B). Cela a pour effet d'alimenter ou gaver l'ouverture (4A, 4B), ce qui est particulièrement intéressant dans le cas de poudres très cohésives qui sont difficiles à doser. La longueur de la tige (16) pourra être suffisante pour passer le plan moyen de l'ouverture (4A, 4B) et même sortir de quelques millimètres du conteneur (2).

Le moyen de transmission (17) comporte en outre un engrenage d'entraînement (22) qui est entraîné par un engrenage moteur (23) fixé à un moteur (24). De cette manière, le brasseur (12) a non seulement un mouvement de translation selon son axe, mais également un mouvement de rotation selon ce même axe.

Un roulement à bille (25), comprenant des paliers (26) guide le moyen de transmission (17) dans son mouvement de translation et de rotation.

L'appareil (1) selon l'invention est particulièrement adéquat pour être mis en oeuvre dans une étape de procédé pour le dosage de précision de poudre. L'appareil (1) est aussi très approprié pour une utilisation dans les dosages de précision de poudre.

## Revendications

1. Appareil (1) pour le dosage de précision de poudre comprenant :
- un conteneur (2) de poudre (3), comprenant une ouverture réglable (4A, 4B) par laquelle la poudre (3) est distribuée, ladite ouverture (4A, 4B) étant en communication directe avec le conteneur (2) ;
- des moyens de réglage (5) de ladite ouverture (4A, 4B) ; et
- un moyen de contrôle (6) de la quantité de poudre (3) distribuée, en relation avec lesdits moyens de réglage (5) ; et
- un moyen de vibration (27) et/ou de tapotage (28) du conteneur (2),
**caractérisé en ce que** le conteneur (2) comprend en outre un brasseur (12) situé dans le volume intérieur dudit conteneur (2), et **en ce que** ledit brasseur (12) est disposé selon un axe passant par l'ouverture (4A, 4B), ledit brasseur (12) comprenant :
- une première extrémité (12A) agencée à proximité du plan moyen de l'ouverture (4A, 4B), et
- une seconde extrémité (12B) opposée à la première extrémité (12A) et qui est reliée à un dispositif transmettant au brasseur (12) un mouvement de va-et-vient selon ledit axe passant par l'ouverture (4A, 4B), et éventuellement un mouvement rotatif autour dudit axe passant par l'ouverture (4A, 4B).

2. Appareil (1) selon la revendication 1 apte à distribuer des poudres avec une précision supérieure ou égale à 100 µg, de préférence avec une précision supérieure ou égale à 50 µg et plus préférentiellement encore avec une précision supérieure ou égale à 10 µg.

3. Appareil (1) selon l'une ou l'autre des revendications 1 ou 2 apte à distribuer des poudres avec une précision moyenne supérieure ou égale à 0,5 mg, de préférence avec une précision moyenne supérieure ou égale à 0,2 mg, et plus préférentiellement encore avec une précision moyenne supérieure ou égale à 0,1 mg.

4. Appareil (1) selon l'une quelconque revendications 1 à 3, dans lequel l'ouverture (4A, 4B) est réglable jusqu'à obturation totale.

5. Appareil (1) selon l'une quelconque des revendications 1 à 4, dans lequel l'ouverture (4A, 4B) a une forme de triangle.

6. Appareil (1) selon l'une quelconque des revendications 1 à 5, dans lequel l'ouverture (4A, 4B) est choisie parmi une ouverture à boisseau (4A, 4B) ou à tiroir (4A, 4C).

7. Appareil (1) selon l'une quelconque des revendications 1 à 6, dans lequel le conteneur (2) comprend une partie récipient (8) et une partie bouchon (9).

8. Appareil (1) selon l'une quelconque des revendications 1 à 7, dans lequel le conteneur comprend une trémie (14) alimentant l'ouverture (4A, 9B).

9. Appareil (1) selon l'une quelconque des revendications 1 à 8, dans lequel les moyens de réglage (5) sont pilotés par un logiciel en fonction de mesures de contrôle fournies par le moyen de contrôle (6).

10. Appareil (1) selon l'une quelconque des revendications 1 à 9, dans lequel les moyens de réglage (5) comprennent un moteur en relation avec un élément de transmission (11) actionnant l'ouverture ou la fermeture de l'ouverture réglable (4A, 9B).

11. Appareil (1) selon l'une quelconque des revendications 1 à 10, dans lequel le moyen de contrôle (6) est une balance ayant une précision de pesée supérieure ou égale à 0,1 mg.

12. Appareil (1) selon l'une quelconque des revendications 1 à 11, dans lequel le moyen de tapotage (28) du conteneur (2) est un doigt escamotable venant frapper l'extérieur du conteneur (2).

13. Appareil (1) selon l'une quelconque des revendications 1 à 12, dans lequel le brasseur (12) est une tige (16).

14. Appareil selon l'une quelconque des revendications 1 à 13, dans lequel la première extrémité (12A) dudit brasseur (12) comprend une tige (16) et la deuxième extrémité (12B) dudit brasseur (12) comprend une lamelle (15) recourbée sur elle-même pour former une boucle allongée selon ledit axe passant par l'ouverture (4A, 4B), ladite lamelle (15) comportant des ailettes (15A) qui saillent de la surface intérieure de la lamelle (15) recourbée en direction dudit axe.

15. Appareil selon l'une quelconque des revendications 1 à 14, dans lequel le dispositif transmettant au brasseur (12) un mouvement de va-et-vient comprend :
- un moyen de transmission (17) reliée à la deuxième extrémité (12B) du brasseur (12),
- un moyen de poussage (21),
- un moyen de tirage (18),
ledit moyen de poussage (21) transmettant un mouvement de translation audit moyen de transmission (17) dans un premier sens selon l'axe dudit moyen de transmission (17) et ledit moyen de tirage (18) transmettant un mouvement de translation audit moyen de transmission (17) selon un sens opposé au premier sens.

16. Appareil selon l'une quelconque des revendications 1 à 15, dans lequel le dispositif transmettant au brasseur un mouvement rotatif comprend un moyen de transmission (17) relié à la deuxième extrémité (12B) du brasseur (12), ledit moyen de transmission (17) comportant un engrenage d'entraînement (22) qui est entraîné par un engrenage moteur (23) fixé à un moteur (24).

17. Appareil (1) selon l'une quelconque des revendications 1 à 16, dans lequel :
- la première extrémité (12A) dudit brasseur (12) comprend une tige (16) et la deuxième extrémité (12B) dudit brasseur (12) comprend une lamelle (15) recourbée sur elle-même pour former une boucle allongée selon ledit axe passant par l'ouverture (4A, 4B), ladite lamelle (15) comportant des ailettes (15A) qui saillent de la surface intérieure de la lamelle (15) recourbée en direction dudit axe,
- le dispositif transmettant au brasseur un mouvement de va-et-vient comprend un moyen de transmission (17) reliée à la deuxième extrémité (12B) du brasseur (12), un moyen de poussage (21), un moyen de tirage (18), ledit moyen de poussage (21) transmettant un mouvement de translation audit moyen de transmission (17) dans un premier sens selon l'axe dudit moyen de transmission (17) et ledit moyen de tirage (18) transmettant un mouvement de translation audit moyen de transmission (17) selon un sens opposé au premier sens,
- le dispositif transmettant au brasseur un mouvement rotatif comprend un moyen de transmission (17) relié à la deuxième extrémité (12B) du brasseur (12), ledit moyen de transmission (17) comportant un engrenage d'entraînement (22) qui est entraîné par un engrenage moteur (23) fixé à un moteur (24).

18. Appareil (1) selon l'une quelconque des revendications 1 à 17, dans lequel le moyen de vibration (27) et/ou de tapotage (28) et/ou le brasseur (12) sont pilotés par un logiciel en fonction de mesures de contrôle fournies par le moyen de contrôle (6) et éventuellement en fonction de caractéristiques de la poudre (3).

19. Appareil (1) selon l'une quelconque des revendications 1 à 17, dans lequel le conteneur (2) comprend en outre un racleur (13), de préférence une lame incurvée ou une brosse rotative.

20. Procédé pour le dosage de précision de poudres mettant en oeuvre l'appareil selon l'une quelconque des revendications 1 à 19, comprenant une ou plusieurs des étapes suivantes :
- mise en place du conteneur (2) en position de dosage,
- ouverture de l'ouverture réglable (4A, 4B) par les moyens de réglage (5),
- éventuellement vibration ou tapotage du conteneur (2),
- mesure de la quantité de poudre (3) distribuée par le moyen de contrôle (6),
- ouverture ou fermeture de l'ouverture réglable (4A, 4B) par les moyens de réglage (5) en fonction de la mesure retournée par le moyen de contrôle (6),
- réglage des moyens de vibration et/ou de tapotage du conteneur (2) en fonction de la mesure retournée par le moyen de contrôle (6).

21. Utilisation d'un appareil (1) selon l'une quelconque des revendications 1 à 20 pour le dosage de précision de poudre.

## Claims

1. Apparatus (1) for accurately metering out powder, comprising
- a container (2) of powder (3), comprising an adjustable opening (4A, 4B) through which the powder (3) is dispensed, said opening (4A, 4B) being in direct communication with the container (2);
- adjusting means (5) for adjusting said opening (4A, 4B), and
- a checking means (6) for checking the amount of powder (3) dispensed, in relation with said adjusting means (5), and
- a vibrating (27) and/or tapping (28) means for vibrating or tapping the container (2),
**characterized by** the fact that the container (2) further comprises a stirrer (12) situated within the interior volume of said container (2), and that said stirrer (12) is situated along an axis passing through the opening (4A, 4B), said stirrer (12) comprising :
- a first end (12A) arranged near the mid-plane of the opening (4A, 4B), and
- a second end (12B) opposite to the first end (12A) and which is connected to a device transmitting to the stirrer (12) a back-and-forth movement along said axis passing through the opening (4A, 4B), and optionally a rotary movement about said axis passing through the opening (4A, 4B).

2. Apparatus (1) as claimed in claim 1 which is able to dispense powders with an accuracy of 100 µg or better, preferably with an accuracy of 50 µg or better, and more preferably with an accuracy of 10 µg or better.

3. Apparatus (1) as claimed in claim 1 or 2 which is able to dispense powders with a mean accuracy of 0.5 mg or better, preferably with a mean accuracy of 0.2 mg or better, and more preferably with a mean accuracy of 0.1 mg or better.

4. Apparatus (1) as claimed in any one of claims 1 to 3, wherein the opening (4A, 4B) can be adjusted to the extent of being completely closed off.

5. Apparatus (1) as claimed in any one of claims 1 to 4, wherein the opening (4A, 4B) is in the shape of a triangle.

6. Apparatus (1) as claimed in any one of claims 1 to 5, wherein the opening (4A, 4B) is selected from an opening with a plug valve (4A, 4B) or an opening with a slide valve (4A, 4C).

7. Apparatus (1) as claimed in any one of claims 1 to 6, wherein the container (2) comprises a receptacle part (8) and a cover (9).

8. Apparatus (1) as claimed in any one of claims 1 to 7, wherein the container comprises a hopper (14) feeding the opening (4A, 4B).

9. Apparatus (1) as claimed in any one of claims 1 to 8, wherein the adjusting means (5) are controlled by software as a function of checking measurement results provided by the checking means (6).

10. Apparatus (1) as claimed in any one of claims 1 to 9, wherein the adjusting means (5) comprise a motor connected to a transmission element (11) actuating the opening or closure of the adjustable opening (4A, 4B).

11. Apparatus (1) as claimed in any one of claims 1 to 10, wherein the checking means (6) is a balance having a weighing accuracy of 0.1 mg or better.

12. Apparatus (1) as claimed in any one of claims 1 to 11, wherein the means (28) for tapping the container (2) is a retractable finger that strikes the outside of the container (2).

13. Apparatus as claimed in any one of claims 1 to 12, wherein the stirrer (12) is a rod (16).

14. Apparatus as claimed in any one of claims 1 to 13, wherein the first end (12A) of said stirrer (12) comprises a rod (16) and the second end (12B) of said stirrer (12) comprises a leaf (15) bent back on itself to form a loop that is elongate along said axis passing through the opening (4A, 4B), said leaf (15) comprising fins (15A) which project from the interior surface of the bent-over leaf (15) toward said axis.

15. Apparatus as claimed in any one of claims 1 to 14, wherein the device transmitting a back-and-forth movement to the stirrer comprises :
- a transmission means (17) connected to the second end (12B) of the stirrer (12),
- a pushing means (21),
- a pulling means (18),
said pushing means (21) transmitting a translational movement to said transmission means (17) in a first direction along the axis of said transmission means (17) and said pulling means (18) transmitting a translational movement to said transmission means (17) in the direction opposite to the first direction.

16. Apparatus as claimed in any one of claims 1 to 15, wherein the device transmitting a rotary movement to the stirrer comprises a transmission means (17) connected to the second end (12B) of the stirrer (12), said transmission means (17) comprising a driving gearing (22) which is driven by a drive gearing (23) fixed to a motor (24).

17. Apparatus (1) as claimed in any one of claims 1 to 16, wherein
- the first end (12A) of said stirrer (12) comprises a rod (16) and the second end (12B) of said stirrer (12) comprises a leaf (15) bent back on itself to form a loop that is elongate along said axis passing through the opening (4A, 4B), said leaf (15) comprising fins (15A) which project from the interior surface of the bent-over leaf (15) toward said axis,
- the device transmitting a back-and-forth movement to the stirrer comprises a transmission means (17) connected to the second end (12B) of the stirrer (12), a pushing means (21), a pulling means (18), said pushing means transmitting a translational movement to said transmission means (17) in a first direction along the axis of said transmission (17) and said pulling means (18) transmitting a translational movement to said transmission means (17) in the direction opposite to the first direction,
- the device transmitting a rotary movement to the stirrer comprises a transmission means (17) connected to the second end (12B) of the stirrer (12), said transmission means (17) comprising a driving gearing (22) which is driven by a drive gearing (23) fixed to a motor (24).

18. Apparatus (1) as claimed in any one of claims 1 to 17, wherein the vibration means (27) and/or the tapping means (28) and/or the stirrer (12) are controlled by software as a function of checking measurement results provided by the checking means (6) and optionally as a function of characteristics of the powder (3).

19. Apparatus (1) as claimed in any one of claims 1 to 17, wherein the container (2) further comprises a scraper (13), preferably a curved blade or a rotary brush.

20. A method for accurately metering out powders using the apparatus as claimed in any one of claims 1 to 19, comprising one or more of the following steps :
- bringing the container (2) into the metering position,
- using the adjusting means (5) to open the adjustable opening (4A, 4B),
- optionally vibrating or tapping the container (2),
- using the checking means (6) to measure the amount of powder (3) dispensed,
- using the adjusting means (5) to open or close the adjustable opening (4A, 4B) as a function of the measurement returned by the checking means (6),
- adjusting the means that vibrate and/or tap the container (2) as a function of the measurement returned by the checking means (6).

21. Use of an apparatus (1) as claimed in any one of claims 1 to 20 for accurately metering out a powder.

## Patentansprüche

1. Vorrichtung (1) zur Feindosierung von Pulver, umfassend:
- einen Behälter (2) für Pulver (3), der eine einstellbare Öffnung (4A, 4B) umfasst, durch die das Pulver (3) ausgegeben wird, wobei sich die Öffnung (4A, 4B) in direkter Verbindung mit dem Behälter (2) befindet;
- Mittel zum Einstellen (5) der Öffnung (4A, 4B); und
- ein Mittel zum Überprüfen (6) der Menge des ausgegebenen Pulvers (3) in Verbindung mit den Mitteln zum Einstellen (5); und
- ein Mittel zum Vibrieren (27) und/oder Schütteln (28) des Behälters (2),
**dadurch gekennzeichnet, dass** der Behälter (2) außerdem ein Rührelement (12) umfasst, das sich in dem Innenraum des Behälters (2) befindet, und dass das Ruhrelement (12) entlang einer Achse angeordnet ist, die durch die Öffnung (4A, 4B) geht, wobei das Rührelement (12) Folgendes umfasst:
- ein erstes Ende (12A), das in der Nähe der Mittelebene der Öffnung (4A, 4B) angeordnet ist, und
- ein zweites Ende (12B), das dem ersten Ende (12A) gegenüberliegt und mit einer Vorrichtung verbunden ist, die eine Vor- und Zurückbewegung entlang der durch die Öffnung (4A, 4B) gehenden Achse und gegebenenfalls eine Drehbewegung um die durch die Öffnung (4A, 4B) gehende Achse an das Rührelement (12) überträgt.

2. Vorrichtung (1) nach Anspruch 1, die dazu ausgelegt ist, Pulver mit einer bei 100 µg liegenden oder besseren Genauigkeit, vorzugsweise mit einer bei 50 µg liegenden oder besseren Genauigkeit, und weiter bevorzugt mit einer bei 10 µg liegenden oder besseren Genauigkeit auszugeben.

3. Vorrichtung (1) nach einem der Ansprüche 1 oder 2, die dazu ausgelegt ist, Pulver mit einer bei 0,5 mg liegenden oder besseren durchschnittlichen Genauigkeit, vorzugsweise mit einer bei 0,2 mg liegenden oder besseren durchschnittlichen Genauigkeit, und weiter bevorzugt mit einer bei 0,1 mg liegenden oder besseren durchschnittlichen Genauigkeit auszugeben.

4. Vorrichtung (1) nach einem der Ansprüche 1 bis 3, bei der die Öffnung (4A, 4B) bis zum völligen Verschluss einstellbar ist.

5. Vorrichtung (1) nach einem der Ansprüche 1 bis 4, bei der die Öffnung (4A, 4B) eine dreieckige Form aufweist.

6. Vorrichtung (1) nach einem der Ansprüche 1 bis 5, bei der die Öffnung (4A, 4B) unter einer scheffel-(4A, 4B) oder schubartigen (4A, 4C) Öffnung ausgewählt ist.

7. Vorrichtung (1) nach einem der Ansprüche 1 bis 6, bei der der Behälter (2) einen aufnehmenden Teil (8) und einen Deckel (9) umfasst.

8. Vorrichtung (1) nach einem der Ansprüche 1 bis 7, bei der der Behälter einen die Öffnung (4A, 4B) versorgenden Trichter (14) umfasst.

9. Vorrichtung (1) nach einem der Ansprüche 1 bis 8, bei der die Einstellmittel (5) abhängig von den von dem Überprüfungsmittel (6) zugeführten Messungen durch eine Software angetrieben werden.

10. Vorrichtung (1) nach einem der Ansprüche 1 bis 9, bei der die Einstellmittel (5) einen Motor umfassen, der mit einem Übertragungselement (11) in Beziehung steht, welches das Öffnen oder Schließen der einstellbaren Öffnung (4A, 4B) bewirkt.

11. Vorrichtung (1) nach einem der Ansprüche 1 bis 10, bei der das Überprüfungsmittel (6) eine Waage ist, die eine Wägegenauigkeit von 0,1 mg oder besser aufweist.

12. Vorrichtung (1) nach einem der Ansprüche 1 bis 11, bei der es sich bei dem Mittel zum Schütteln (28) des Behälters (2) um einen einziehbaren Stift handelt, der gegen das Äußere des Behälters (2) schlägt.

13. Vorrichtung (1) nach einem der Ansprüche 1 bis 12, bei der es sich bei dem Rührelement (12) um eine Stange (16) handelt.

14. Vorrichtung nach einem der Ansprüche 1 bis 13, bei der das erste Ende (12A) des Rührelements (12) eine Stange (16) umfasst und das zweite Ende (12B) des Rührelements (12) eine auf sich selbst zurückgebogene Lamelle (15) umfasst, um eine entlang der durch die Öffnung (4A, 4B) gehenden Achse langgestreckte Schleife zu bilden, wobei, die Lamelle (15) Blätter (15A) umfasst, die von der inneren Oberfläche der Lamelle (15) vorragen, welche in Richtung der Achse gebogen ist.

15. Vorrichtung nach einem der Ansprüche 1 bis 14, in der die Vorrichtung, die an das Rührelement (12) eine Vor- und Zurückbewegung überträgt, Folgendes umfasst:
- ein Übertragungsmittel (17), das mit dem zweiten Ende (128) des Rührelements (12) verbunden ist,
- ein Schubmittel (21),
- ein Zugmittel (18),
wobei das Schubmittel (21) eine translatorische Bewegung auf das Übertragungsmittel (17) in einer ersten Richtung entlang der Achse des Übertragungsmittels (17) überträgt und das Zugmittel (18) eine translatorische Bewegung in einer der ersten Richtung entgegengesetzten Richtung auf das Übertragungsmittel (17) überträgt.

16. Vorrichtung nach einem der Ansprüche 1 bis 15, wobei die Vorrichtung, die eine Drehbewegung auf das Rührelement überträgt, ein Übertragungsmittel (17) umfasst, das mit dem zweiten Ende (12B) des Rührelements (12) verbunden ist, wobei das Übertragungsmittel (17) ein Antriebsgetriebe (22) aufweist, das durch ein an einem Motor (24) befestigtes Motorgetriebe (23) angetrieben wird.

17. Vorrichtung (1) nach einem der Ansprüche 1 bis 16, wobei :
- das erste Ende (12A) des Rührelements (12) eine Stange (16) und das zweite Ende (12B) des Rührelements (12) eine Lamelle (15) umfasse, welche auf sich selbst zurückgebogen ist, um eine entlang der durch die Öffnung (4A, 4B) gehenden Achse langgestreckte Schleife zu bilden, wobei die Lamelle (15) Blätter (15A) umfasst, die von der in Richtung der Achse gebogenen Innenoberfläche der Lamelle (15) vorragen,
- die Vorrichtung, die an das Rührelement eine Vor- und Zurückbewegung überträgt, ein Übertragungsmittel (17), das mit dem zweiten Ende (12B) des Rührelements (12) verbunden ist, ein Schubmittel (21) und ein Zugmittel (18) umfasst, wobei das Schubmittel (21) eine translatorische Bewegung in einer ersten Richtung entlang der Achse des Übertragungsmittels (17) auf das Übertragungsmittel (17) überträgt, und das Zugmittel (18) eine translatorische Bewegung in einer der ersten Richtung entgegengesetzten Richtung auf das Übertragungsmittel (17) überträgt,
- die Vorrichtung, die eine Drehbewegung auf das Rührelement überträgt, ein Übertragungsmittel (17) umfasst, das mit dem zweiten Ende (12B) des Rührelements (12) verbunden ist, wobei das Übertragungsmittel (17) ein Antriebsgetriebe (22) umfasst, das von einem an einem Motor (24) befestigten Motorgetriebe (23) angetrieben wird.

18. Vorrichtung (1) nach einem der Ansprüche 1 bis 17, bei der das Mittel zum Vibrieren (27) und/oder Schütteln (28) und/oder das Rührelement (12) abhängig von den von dem Überprüfungsmittel. (6) bereitgestellten Steuermessungen und gegebenenfalls abhängig von den Merkmalen des Pulvers (3) durch eine Software gesteuert werden.

19. Vorrichtung (1) nach einem der Ansprüche 1 bis 17, bei der der Behälter (2) außerdem ein Rakel (13) vorzugsweise eine gekrümmte Klinge oder eine Drehbürste umfasst.

20. Verfahren zum Feindosieren von Pulvern, das die Vorrichtung nach einem der Ansprüche 1 bis 19 einsetzt, umfassend einen oder mehrere der folgenden Schritte:
- Platzierung des Behälters (2) in Dosierposition,
- Öffnen der einstellbaren Öffnung (4A, 4B) durch die Einstellmittel (5),
- gegebenenfalls Vibrieren oder Schütteln des Behälters (2),
- Messen der Menge des ausgegebenen Pulvers (3) durch das Überprüfungsmittel. (6),
- Öffnen oder Schließen der einstellbaren Öffnung (4A, 4B) durch die Einstellmittel (5) abhängig von der durch das Überprüfungsmittel (6) zurückgegebenen Messung,
- Einstellen der Mittel zum Vibrieren und/oder Schütteln des Behälters (2) abhängig von der durch das Überprüfungsmittel (6) zurückgegebenen Messung.

21. Verwendung einer Vorrichtung (1) nach einem der Ansprüche 1 bis 20 zum Feindosieren von Pulver.
